(19) Europäisches Patentamt
European Patent Office
Office européen des brevets

(11) EP 2 207 358 A1

(12) EUROPEAN PATENT APPLICATION
published in accordance with Art. 153(4) EPC

(43) Date of publication:
14.07.2010 Bulletin 2010/28

(51) Int Cl.:
*H04N 7/32* (2006.01)

(21) Application number: 08838646.1

(86) International application number:
PCT/JP2008/002924

(22) Date of filing: 15.10.2008

(87) International publication number:
WO 2009/050889 (23.04.2009 Gazette 2009/17)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 15.10.2007 EP 07020168

(71) Applicant: Panasonic Corporation
Kadoma-shi
Osaka 571-8501 (JP)

(72) Inventors:
• Knicker, Florian
63225 Langen (DE)
• Wedi, Thomas, Dr.
63225 Langen (DE)
• Ramond, Adrien
63225 Langen (DE)

(74) Representative: Grünecker, Kinkeldey,
Stockmair & Schwanhäusser
Anwaltssozietät
Leopoldstrasse 4
80802 München (DE)

(54) **VIDEO DECODING METHOD AND VIDEO ENCODING METHOD**

(57) The present invention prevents coding artifacts caused in applying image enhancement technologies to pictures that have been encoded and then decoded. A video decoder (200) decodes an encoded stream generated by encoding a prediction error that is a difference between an original image and a prediction image. The video decoder (200) includes: an entropy decoding unit (231) decoding the prediction error in the encoded stream; an adder (244) adding the decoded prediction error to a previously-generated decoded image to generate a decoded image; an image enhancement unit (260) performing a process of enhancing image quality of the generated decoded image to generate an enhanced image; and a mask construction unit (240) determining a weight coefficient for each image area based on the decoded prediction error. The image enhancement unit (260) generates an output image by computing a weighted sum of the decoded image and the enhanced image in accordance with the determined weight coefficient.

FIG. 2

EP 2 207 358 A1

**Description**

**Technical Field**

The present invention relates to prediction-based video decoding method and video encoding method, and corresponding apparatuses, and in particular to a method for post-processing decoded images to enhance subjective image quality, and a corresponding apparatus.

**Background Art**

State-of-the-art video encoding techniques such as H.264/AVC standard compress image or video data by accepting the loss of information caused by quantization. These techniques are optimized to keep the encoded pictures as close as possible to the original ones and to hide coding artifacts for the human viewer.

Obviously, compressing pictures to a low bitrate and hiding coding artifacts are conflicting goals. One important aspect is, that even if no artifacts are visible, a loss of sharpness remains in many cases. Therefore, a large amount of bits have to be spent to really conserve the sharpness of the original images. Because the available bitrate is strictly limited in many applications, post processing techniques like unsharp masking or local contrast enhancement is applied to bring back some of the sharpness impression, without using bits to conserve the sharpness.

However, a common problem in these post processing techniques for sharpening is that coding artifacts may also be amplified.

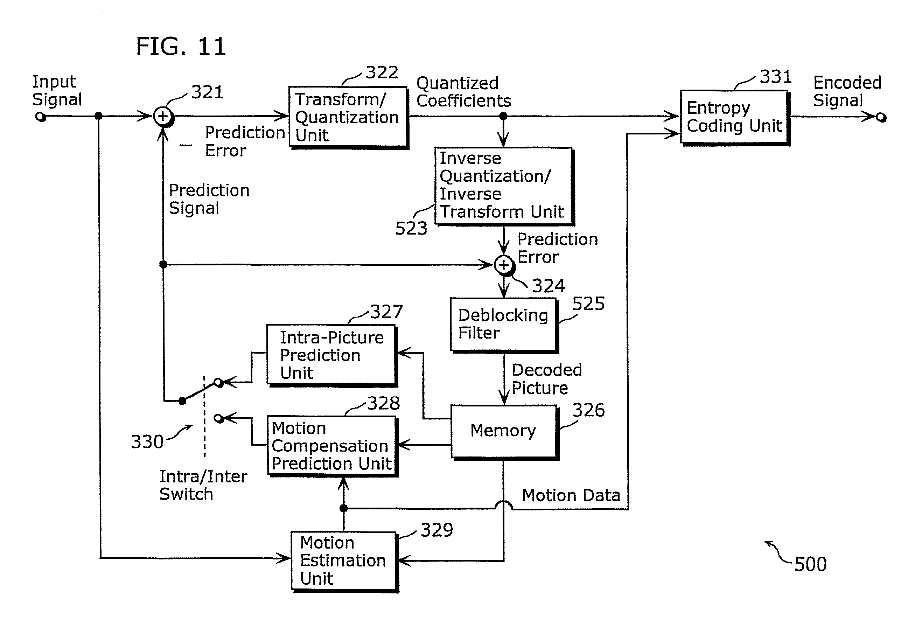

FIG. 11 illustrates a block diagram of an example of a conventional video encoder 500. In the video decoder 500 illustrated in FIG. 11, in accordance with the H.264 / AVC standard, the input image is divided into macroblocks. The video encoder 500 employs a Differential Pulse Code Modulation (DPCM) approach which only transmits differences (hereinafter, referred to also as "prediction error") calculated between blocks of the input image and previously encoded and then decoded blocks.

The video encoder 500 of FIG. 11 includes a subtractor 321 for determining differences between (i) a current block (input signal) of the input image included in a video sequence and (ii) a prediction block (prediction signal) corresponding to the current block which is based on previously encoded and then decoded blocks stored in memory 326. The subtractor 321 receives the current block to be encoded and subtract the prediction block from the received current block to compute a difference (prediction error).

A transform and quantization unit 322 transforms the prediction error computed by the subtractor 321 from the spatial domain to the frequency domain. In addition, the transform and quantization unit 322 quantizes the obtained transform coefficients.

An entropy coding unit 331 entropy-codes the quantized coefficients which are transformed and quantized by the transform and quantization unit 322.

The locally decoded image is provided by a decoding unit (including an inverse quantization and inverse transform unit 523, an adder 324, and a deblocking filter 525) incorporated into video encoder 500. The decoding unit performs the encoding steps in reverse manner. In more detail, the inverse quantization and inverse transform unit 523 de-quantizes (inversely quantizes) the quantized coefficients and applies an inverse transformation on the de-quantized coefficients in order to recover the prediction error. The adder 324 adds the prediction error to the prediction signal to form the locally decoded image. Further, the deblocking filter 525 reduces blocking artifacts in the locally decoded image.

The type of prediction that is employed by the video encoder 500 depends on whether the macroblocks are encoded in "Intra" or "Inter" mode. In "Intra" mode the video encoding standard H.264/AVC uses a prediction scheme based on already encoded and then decoded macroblocks of the same image in order to predict subsequent macroblocks. In "Inter" mode, motion compensation prediction between corresponding blocks of several consecutive pictures is employed.

Only Intra-encoded images (I-type images) can be decoded without reference to any previously decoded image. The I-type images provide error resilience (error recovery ability) for the encoded video sequence. Further, entry points into bit streams of encoded data are provided in order to access the I-type images within the sequence of encoded video images. A switch between Intra-mode, i.e. a processing by the Intra-picture prediction unit 327, and Inter-mode, i.e. a processing by a motion compensation prediction unit 328, is controlled by an Intra/Inter switch 330.

In "Inter" mode, a macroblock is predicted from corresponding blocks of previous pictures by employing motion compensation. The estimation is accomplished by a motion estimation unit 329, receiving the current input signal and the locally decoded image. Motion estimation yields two-dimensional motion vectors, representing a pixel displacement (motion) between the current block and the corresponding block in previous pictures. Based on the estimated motion, a motion compensation prediction unit 328 provides a prediction signal.

For both the "Intra" and the "Inter" encoding modes, the difference between the current and the predicted signal are transformed into transform coefficients by the transform and quantization unit 322. Generally, an orthogonal transformation such as a two-dimensional Discrete Cosine Transformation (DCT) or an integer version thereof is employed.

The transform coefficients are quantized by the transform and quantization unit 322 in order to reduce the amount of data that has to be encoded. The step of quantization is controlled by quantization tables that specify the precision and therewith the number of bits that are used to encode each frequency coefficient. Lower frequency components are usually more important for image quality than fine details so that more bits are spent for encoding the low frequency components than for the higher ones.

After quantization, the two-dimensional array of transform coefficients is converted into a one-dimensional string to pass it to the entropy coding unit 331. This conversion is done by scanning the array in a predetermined sequence. The thus obtained one-dimensional sequence of quantized transform coefficients is compressed to a series of number pairs called run levels. Finally, the run-level sequence is encoded with binary code words of variable length (Variable Length Code, VLC). The code is optimized to assign shorter code words to most frequent run-level pairs occurring in typical video images. The resulting bitstream is multiplexed with the motion data and stored on a recording medium or transmitted to the video decoder side.

For reconstructing the encoded images based on the bitstream transmitted from the video encoder, the video decoder applies the encoding process in reverse manner.

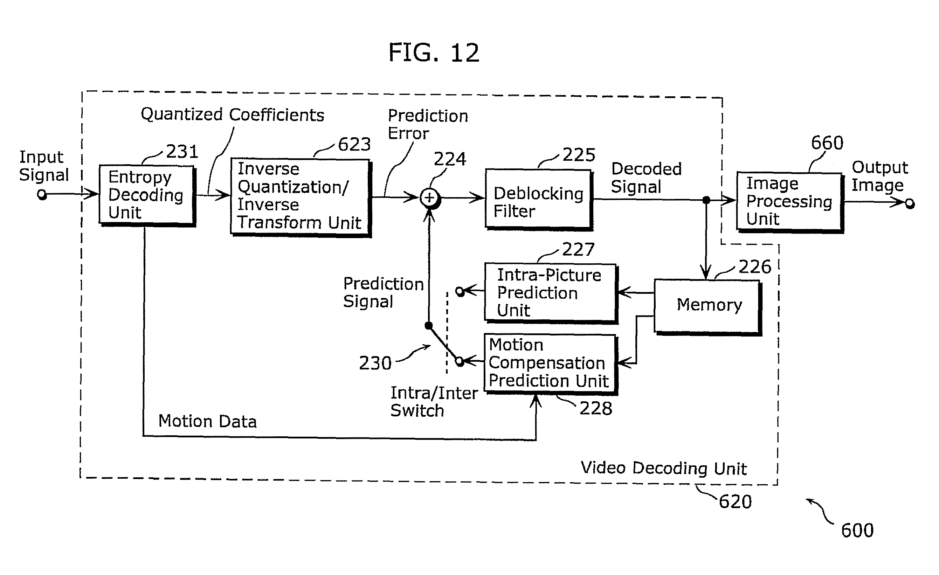

FIG. 12 is a block diagram illustrating a structure of a conventional video decoder 600. The video decoder 600 illustrated in FIG. 12 includes a video decoding unit 620 and an image enhancement unit 660.

In the video decoder 600 of FIG. 12, firstly the entropy decoding unit 231 entropy-decodes quantized coefficients and motion data which have been entropy-coded. This step also involves an inverse scanning in order to convert the decoded transform coefficients into a two-dimensional block of data as it is required for the inverse transformation. The decoded block of transform coefficients is then submitted to the inverse quantization and inverse transform unit 623 and the decoded motion data is sent to the motion compensation prediction unit 228.

The result of the inverse quantization and inverse transformation includes the quantized prediction error, which is added by adder 224 to the prediction signal stemming from the motion compensation prediction unit 228 in Inter-mode or stemming from the Intra-picture prediction unit 227 in Intra-mode. The reconstructed image may be passed through the deblocking filter 225 and the decoded image (decoded signal) processed by the deblocking filter 225 is stored in the memory 226 to be applied to the Intra-picture prediction unit 227 or the motion compensation prediction unit 228. Finally, in the image enhancement unit 660, image post-processing is applied in the decoded signal in order to enhance subjective image quality.

Especially at low bitrates and high compression ratios, the quality of decoded images tends to be degraded due to loss of high frequency components and other coding artifacts. It is thus the aim of a plurality of conventional decoders including the video conventional decoder 600 to improve the (subjective) image quality by applying all kinds of post-processing techniques to decoded images.

Among these techniques are image enhancement filters that try to improve the "sharpness" of decoded images, basically by selectively amplifying high frequency components of the decoded images. An example for such a technique is unsharp masking. In the unsharp masking, an "unsharp", i.e., low-pass filtered copy of an image is subtracted from the image, creating the illusion that the resulting image is sharper than the original.

More sophisticated techniques for enhancing subjective image quality rely on statistical properties of the image components that are to be reconstructed. The statistical properties are derived from the original image or from predetermined reference images. The idea is to replace fine details within the decoded image, which are most severely affected by encoding losses, by a synthetic texture that has been generated in accordance with the statistical properties. The resulting image is not a faithful reproduction of the original one but may nevertheless provide a significantly improved subjective image quality.

The following describes a method for enhancing image quality of decoded images using conventional statistical properties.

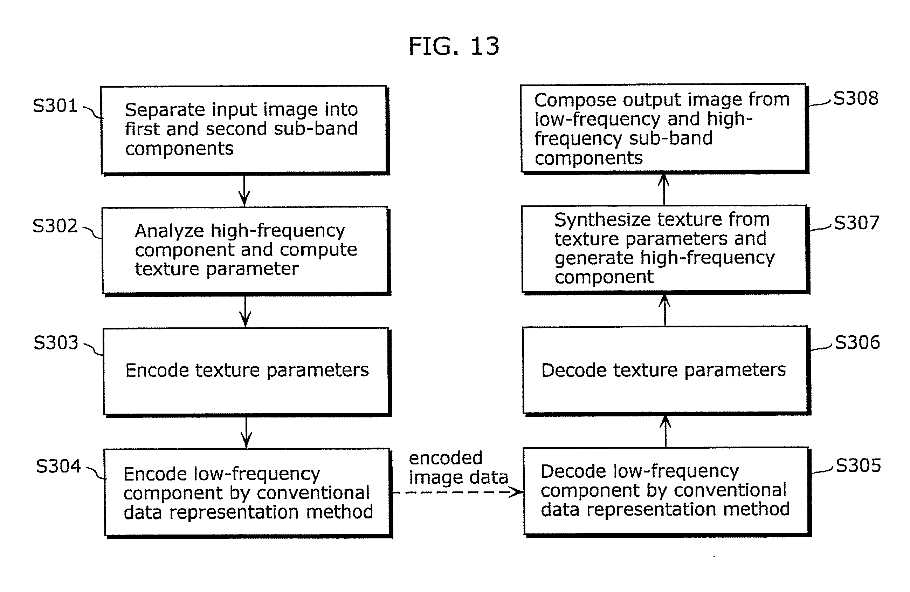

FIG. 13 is a flowchart illustrating a conventional method for image and video encoding employing additional statistical parameter, and a conventional method for image and video decoding.

An input image is separated into a first and a second sub-band components (a high-frequency component and a low-frequency component, for example) (S301). Then, the high-frequency component is analyzed so as to compute representative texture parameters (S302). The computed texture parameters are then encoded (S303). The low-frequency component, on the other hand, is encoded by a conventional prediction-based video encoding method (S304). The above steps (S301 to S304) are performed by the conventional image and video encoder.

Thereby, both of the high-frequency component and the low-frequency component are encoded to eventually encode the entire input image. At this point the entire input image is encoded and the encoded image data may be stored to a recording medium or transmitted via a communications channel.

Upon decoding the encoded image data, the low-frequency component is decoded by the conventional prediction-based video decoding method (S305). The texture parameters, on the other hand, are decoded (S306) and texture is synthesized from the decoded texture parameters so as to generate a high-frequency component (S307).

Finally, the output image is composed using the low-frequency and the high-frequency components (S308). The above steps (S305 to S308) are performed by the conventional image and video decoder.

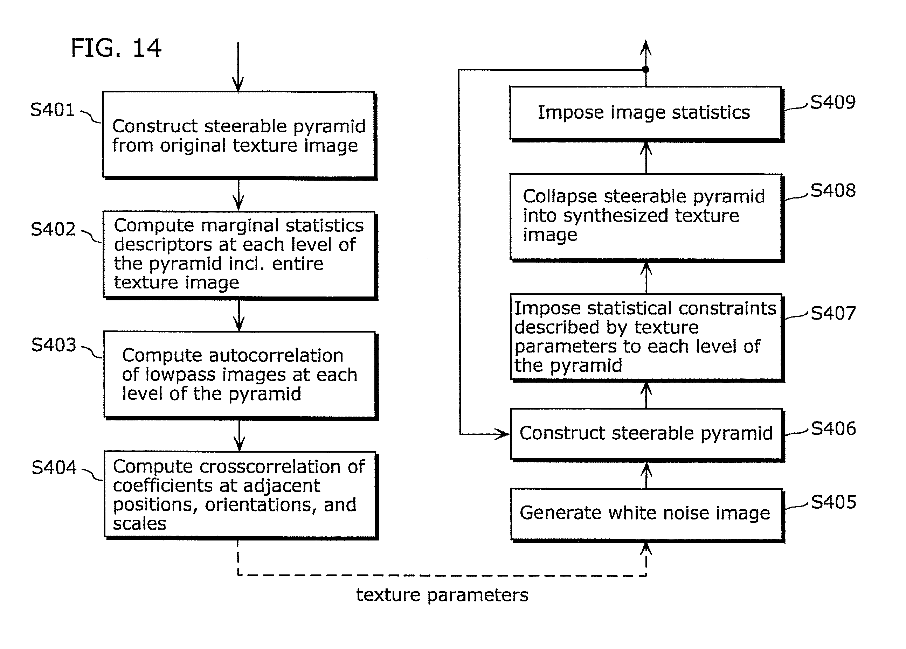

Obviously, the extraction of statistical image properties and the generation of a synthetic texture in accordance with these parameters are a crucial element of any image enhancement technique based on additional statistical parameters. Basically, any texture analysis and synthesis method known in the art may be employed, such as a parametric texture model based on joint statistics of complex wavelet transforms, which is illustrated by the flowchart in FIG. 14.

FIG. 14 is a flowchart of a conventional texture analysis and synthesis method.

A steerable pyramid is constructed by recursively decomposing the input signal into a set of oriented sub-bands and a low-pass residual band (S401). Statistical texture parameters such as marginal statistics descriptors, autocorrelations, or crosscorrelations are then computed in using this decomposition. In particular, marginal statistics descriptors such as variance, skewness and kurtosis as well as minimum and maximum values of the image pixels are computed at each level of the pyramid, including parameters that describe the marginal statistics of the entire image (S402). Moreover, autocorrelations of lowpass image are computed at each level of the pyramid (S403). Then, crosscorrelations of coefficients, such as adjacent positions, orientations, and scales, are computed at and inbetween the levels of the pyramid (S404).

From the thus computed texture parameters arbitrary amounts of alike looking texture can be generated. Specifically, a white noise image is generated (S405) and decomposed into oriented sub-bands by the steerable pyramid approach in accordance with the decomposition performed at Step S401 (S406). Each sub-band of the white noise image is further tweaked so as to meet the statistical constraints described by the computed texture parameters (S407). Finally, the pyramid is collapsed into the synthesized texture image (S408) and tweaked so that the marginal statistics of its pixel data meets statistical parameters computed at Step S402 for the entire image (S409).

The construction of the pyramid (S406) to the imposition of statistical properties (S409) may be iterated, i.e., the generated texture may be employed as a starting point for the decomposition and tweaking process instead of the white noise image, for a predetermined number of iterations or until the synthesized texture has become sufficiently stable.

The following describes another conventional method for enhancing an image based on statistical properties.

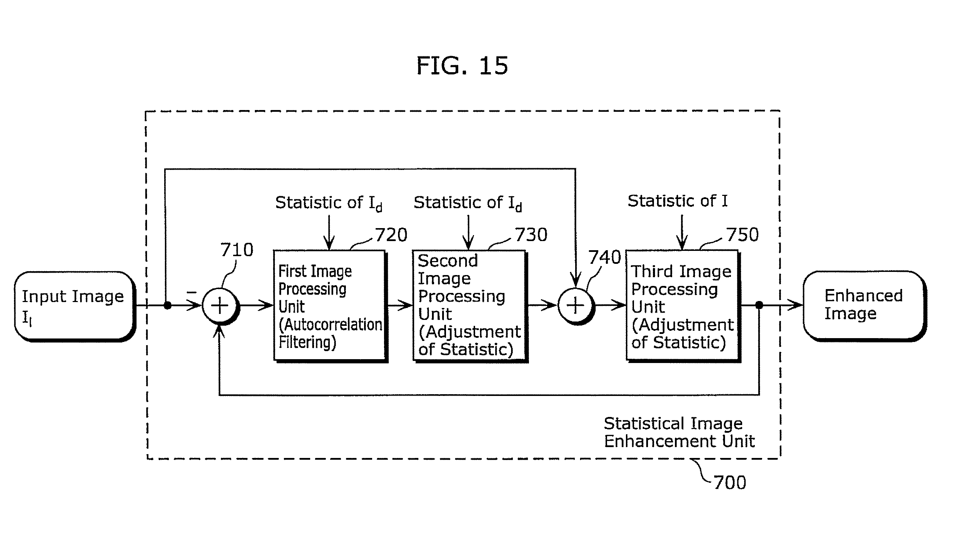

FIG. 15 is a block diagram illustrating a structure of a conventional image enhancement device 700 that enhances an image based on statistical parameters. For example, if an original image I and a low-pass image $I_l$ are given, the low-pass image $I_l$ can be enhanced by reconstructing the missing frequency components by adjusting some image statistics. To this end, the higher order statistics and the autocorrelation of the original image I and the difference image $I_d = I - I_l$ are analyzed at a first step. At a second step, the result of the analysis is used to reconstruct the missing frequency components in the low-pass image $I_l$.

In FIG. 15, an input image $I_l$, which may correspond to a low-pass filtered (or encoded) version of an original image I, is fed to a first image processing unit 720 that applies a filter in order to match spatial statistical properties of the input image with spatial statistical properties of a first reference image $I_d$. A first reference image is also fed to the first image processing unit 720. The first reference image corresponds to the difference between the original image and a lowpass filtered version thereof, $I_d = I - I_l$. In this case, the filter basically corresponds to a carefully designed high-pass filter.

The thus filtered image is then fed to a second image processing unit 730 that matches higher order statistical properties with those of the first reference image $I_d$. The output of the second image processing unit 730 is added to the input image by means of the adder 740 and fed to a third image processing unit 750 in order to match higher order statistical properties with those of a second reference image I, such as the original image.

Since adjusting the statistical properties in the first, second, and third image processing units 720, 730, and 750 cannot be performed independently of each other, an iteration may be executed in order to further improve the result. Hence, the output of the third image processing unit 750 is fed back to a subtractor 710 to subtract the input image and to apply the above described processing steps to the thus computed difference image. A number of about seven iterations has turned out to yield optimal results. In the first (zero-th) iteration, when no output of the third image processing unit 750 is yet available, the subtractor 710 may be skipped, for instance by means of a switch (not shown), so as to directly feed the input image to the first image processing unit 720. Alternatively, an optional input image (not shown) may be provided, for instance from another conventional sharpening algorithm to substitute the non-available output of the third image processing unit 750.

The first image processing unit 720 preferably performs autocorrelation filtering in order to adjust (parts of) the autocorrelation function of the image to an autocorrelation function computed for the first reference image. To this end, the first image processing unit 720 determines filter coefficients based on values of the autocorrelation function of the input image and based on values of the autocorrelation function of the first reference image, which form part of its spatial statistical properties. Any method known in the art for determining such a filter may be employed, in particular the method disclosed in Non-Patent Reference 1.

In case of image sharpening, values of the autocorrelation function in a neighborhood of zero are particularly relevant. Accordingly, the first image processing unit 720 determines filter coefficients of an N x N-tap filter on the basis of N x N zero-neighborhood values of the autocorrelation function of the input image and the first reference image. A number of N = 7 has turned out to yield optimum results, although any other number of taps may be employed likewise. A filter with the thus determined filter coefficients is then applied to the input image in order to generate the output of the first image processing unit 720.

The second and the third image processing units 730 and 750 are adapted to adjust higher order statistical properties of their respective input signals. The higher order statistical properties comprise marginal statistics descriptors such as mean, variance, skewness and kurtosis of the pixel values. Mean and variance, for instance, may be considered as a measure for average brightness and contrast, respectively, of the image. Optimum results can be obtained by adjusting the marginal distribution up to and including its fourth moment, i.e., by adjusting all of mean, variance, skewness and kurtosis. Other statistical properties may likewise be employed, including only a subset of the described properties, even higher order moments of the marginal distribution, other statistical properties such as spatial correlations of the pixel values, correlations between different sub-bands of the image, and so on.

The second and the third image processing units 730 and 750 determine a transformation that maps each pixel value to a target pixel value so that the desired marginal statistics constraints are met. Mean and variance, for instance, can be matched by subtracting the mean of the input signal from each pixel value, scaling the result by the ratio of the target standard deviation (i.e. the square root of the variance) and the standard deviation of the input signal, and adding the target mean. Skewness and kurtosis can likewise be adjusted by applying a (6th-order) polynomial to the pixel values. Any method known in the art for determining the coefficients for such a transformation can be employed, including gradient projection algorithms or the method disclosed by Non-Patent Reference 1.

As explained above, conventionally image enhancement techniques using statistical parameters have been applied to decoded images to enhance image quality.

[Non-Patent Reference 1] J. Portilla and E. P. Simoncelli, A parametric texture model based on joint statistics of complex wavelet coefficients, Int. J. Comput. Vis., vol. 40, 2000

### Disclosure of Invention

### Problems that Invention is to Solve

Unfortunately, when the above-described image enhancement techniques are applied to decoded images, there is a problem that coding artifacts may be amplified to deteriorate the image quality.

The conventional enhancement techniques generally enhance the sharpness of an image. The effects of these techniques are often impressive but also can lead to unnatural appearance of the pictures. Especially in the case of lossy encoding schemes problems tend to occur. When image enhancement techniques are applied to such kind of compressed images, coding artifacts, such as blocking artifacts, may be amplified or just become visible.

An object of the present invention is to provide a video decoding method and a video encoding method for generating an image with reduced coding artifacts that are caused by an application of image enhancement techniques to an image that has been encoded and then decoded.

### Means to Solve the Problems

In accordance with a first aspect of the present invention for achieving the object, there is provided a video decoding method of decoding an encoded stream generated by encoding a prediction error that is a difference between an original image and a prediction image, the video decoding method comprising: decoding the prediction error included in the encoded stream; adding the prediction error decoded in the decoding to a previously-generated decoded image so as to generate a decoded image; applying a process of enhancing image quality to the decoded image generated in the adding to generate an enhanced image; determining a weight coefficient for each of predetermined image areas based on the prediction error decoded in the decoding; and computing a weighted sum of the decoded image and the enhanced image in accordance with the weight coefficient determined in the determining so as to generate an output image.

Thereby, a determination as to whether to enhance (i) the enhanced image applied with the image enhancement process or (ii) the decoded image not applied with the image enhancement process can be made for each predetermined image area, for example, for each block or for each pixel. In addition, the weight coefficient is determined for each predetermined image area, and a weighted sum of the enhanced image and the decoded image is computed in accordance with the determined weight coefficient. Therefore, the whole enhanced image is applied with the image enhancement process having the same strength, not varying the strength for each predetermined image area. As a result, complicated processing can be avoided.

Further, it is also possible that the determining the weight coefficient is determined so that the enhanced image is weighted more strongly (i) in one of the predetermined image areas where an absolute value of the prediction error is small than (ii) in another one of the predetermined image areas where an absolute value of the prediction error is large.

Thereby, an image area with large prediction error generally has low reliability in prediction, being likely to have coding artifacts. Therefore, such an image area with large prediction error is weighted more weakly in the enhanced image so as to prevent occurrence of the coding artifacts. In contrast, an image area with small prediction error generally has high reliability in prediction, being unlikely to have coding artifacts. Therefore, such an image area with small prediction error is weighted more strongly in the enhanced image so as to enhance image quality.

Still further, the determining may include: computing a mask value for each of the predetermined image areas by mapping the absolute value of the prediction error in a range between 0 and 1; and setting the mask value as the weight coefficient for the decoded image, and setting one minus the mask value as the weight coefficient for the enhanced image.

Thereby, a magnitude relation among the absolute values of the prediction errors can be reflected in the weight coefficients. As a result, it is possible to determine the weight coefficients more appropriately.

Still further, in the computing of the mask value, the absolute value of the prediction error may be mapped in the range between 0 and 1 in accordance with a standard deviation of the prediction error

Still further, in the computing of the mask value, a morphological process may be applied to the absolute value mapped so as to compute the mask value for each of the predetermined image areas.

Still further, the computing of the mask value may include adjusting a mean of a plurality of mask values including the mask value to be a predetermined target value.

Thereby, it is possible to compute more appropriate mask values and weight coefficients.

Still further, the encoded stream may include parameter data indicating statistical properties of the original image, and in the enhancing, the decoded image may be processed in accordance with the parameter data so as to generate the enhanced image.

Thereby, the use of the statistical properties of the original image appropriately recovers components lost in the encoding processing. As a result, image quality can be enhanced.

Still further, in the enhancing, the decoded image may be processed in accordance with a texture generation algorithm using the parameter data so as to generate the enhanced image.

Still further, in the enhancing, sharpening filter may be applied to the decoded image.

Still further, in the enhancing, one of a high-pass filter or a low-pass filter may be applied to the decoded image.

Thereby, it is possible to enhance image quality of the decoded image.

Still further, in the determining of the weight coefficient, the weight coefficient may be determined for each pixel.

Thereby, the image area where coding artifacts are likely to occur can be determined with a considerably high accuracy. As a result, the occurrence of the coding artifacts can be further prevented, thereby generating images with higher image quality.

In accordance with a second aspect of the present invention for achieving the object, there is provided a video encoding method of encoding a prediction error that is a difference between an original image and a prediction image and computing a statistical parameter of the original image, the video encoding method includes: computing the prediction error; determining a weight coefficient for each of predetermined image areas based on the prediction error computed in the computing; and computing the statistical parameter by analyzing statistical properties of the original image and weighting the statistical properties of each of the predetermined image areas using the weight coefficient.

Thereby, the statistical properties obtained by the analysis are weighted based on the prediction error. The resulting statistical parameter is used to apply post processing to the decoded image. As a result, it is possible to generate image with higher image quality.

Furthermore, in the determining, the weight coefficient may be determined so that (i) one of the predetermined image areas where an absolute value of the prediction error is small is weighted more strongly than (ii) another one of the predetermined image areas where an absolute value of the prediction error is large.

Thereby, since an image area with large prediction error has low reliability in prediction, influence of such an image area with large prediction error can be prevented when analyzing the statistical properties. Therefore, the resulting statistical parameter is used to apply post processing to the decoded image, thereby generating image with higher image quality.

Still further, the determining of the weight coefficient may include computing a mask value for each of the predetermined image areas by mapping the absolute value of the prediction error in a range between 0 and 1.

Thereby, a magnitude relation among the absolute values of the prediction errors can be reflected in the weight coefficients. As a result, it is possible to determine the weight coefficients more appropriately.

It should be noted that the present invention can be implemented not only as the video decoding method and the video encoding method, but also as devices including processing units performing the steps of the video decoding method and the video encoding method.

The present invention may be implemented also as a program causing a computer to execute the steps of the video decoding method and the video encoding method. Furthermore, the present invention may be implemented as a computer-readable recording medium, such as a Compact Disc-Read Only Memory (CD-ROM), on which the program is recorded, and information, data, or signals indicating the program. The program, information, data, or signals can be distributed via a communications network such as the Internet.

It should also be noted that a part or all of the structure elements of the video decoder and the video encoder may be integrated into a single system Large Scale Integration (LSI). The system LSI is a super multifunctional LSI that is a single chip on which a plurality of elements are integrated. Examples of the system LSI is a computer system having a microprocessor, a ROM, and a Random Access Memory (RAM), and the like.

**Effects of the Invention**

The present invention can generate an image with reduced coding artifacts that are caused by an application of image enhancement techniques to an image that has been encoded and then decoded.

**Brief Description of Drawings**

[FIG. 1] FIG. 1 is a block diagram illustrating an example of configuration of a codec system employing a mask-controlled image enhancement technique in accordance with a first embodiment of the present invention.

[FIG. 2] FIG. 2 is a block diagram illustrating an example of a structure of a video decoder in accordance with the first embodiment of the present invention.

[FIG. 3] FIG. 3 is a block diagram illustrating an example of a structure of a mask construction unit in accordance with the first embodiment of the present invention.

[FIG. 4] FIG. 4 is a block diagram illustrating an example of a detailed structure of an image processing unit in accordance with the first embodiment of the present invention.

[FIG. 5] FIG. 5 is a schematic diagram illustrating image enhancement process in accordance with the first embodiment of the present invention.

[FIG. 6] FIG. 6 is a flowchart of processing performed by the video decoder in accordance with the first embodiment of the present invention.

[FIG. 7] FIG. 7 is a block diagram illustrating an example of configuration of a codec system employing a mask-controlled image enhancement technique in accordance with a second embodiment of the present invention.

[FIG. 8] FIG. 8 is a block diagram illustrating an example of a structure of a video encoder in accordance with the second embodiment of the present invention.

[FIG. 9] FIG. 9 is a block diagram illustrating an example of a structure of a video decoder in accordance with the second embodiment of the present invention.

[FIG. 10] FIG. 10 is a flowchart of processing performed by the video encoder in accordance with the second embodiment of the present invention.

[FIG. 11] FIG. 11 is a block diagram illustrating an example of a conventional video encoder.

[FIG. 12] FIG. 12 is a block diagram illustrating a structure of a conventional video decoder.

[FIG. 13] FIG. 13 is a flowchart illustrating a conventional method for image and video encoding employing additional statistical parameters, and a conventional method for image and video decoding.

[FIG. 14] FIG. 14 is a flowchart of a conventional texture analysis and synthesis method.

[FIG. 15] FIG. 15 is a block diagram illustrating a structure of a conventional image enhancement device that enhances an image based on statistical parameters.

**Numerical References**

| | |
|---|---|
| 100, 300, 500 | video encoder |
| 120, 320 | video encoding unit |
| 200, 400, 600 | video decoder |
| 220, 620 | video decoding unit |
| 223, 323, 523, 623 | inverse quantization and inverse transform unit |
| 224, 324, 740 | adder |
| 225, 325, 525 | deblocking filter |
| 226, 326 | memory |

| 227, 327 | Intra-picture prediction unit |
| 228, 328 | motion compensation prediction unit |
| 230, 330 | Intra/Inter switch |
| 231 | entropy decoding unit |
| 240, 340 | mask construction unit |
| 241 | mapping processing unit |
| 242 | inverse processing unit |
| 243 | morphological operation unit |
| 244 | mean adjustment unit |
| 260, 460 | image processing unit |
| 261, 660 | image enhancement unit |
| 262 | weighted-sum computation unit |
| 321, 710 | subtractor |
| 322 | transform and quantization unit |
| 329 | motion estimation unit |
| 331 | entropy coding unit |
| 360 | image analysis unit |
| 700 | statistical image enhancement device |
| 720 | first image processing unit |
| 730 | second image processing unit |
| 750 | third image processing unit |

**Best Mode for Carrying Out the Invention**

The video encoding method and the video decoding method in accordance with the present invention aim on the reduction of coding artifact amplification that is caused by an application of conventional image enhancement techniques to pictures that have been encoded and then decoded.

To this end, the (quantized) prediction error of an encoded video sequence transmitted from the video encoder is used at the video decoder in accordance with the present invention to construct a mask. The mask indicates image areas where coding artifacts are likely to occur. The mask is used to control the image enhancement process. More specifically, in the video decoder in accordance with the present invention, the mask is employed to ensure that the enhancement process is predominantly applied to those image areas, where coding artifacts are not likely to occur.

Areas of an encoded image where coding artifacts are likely to occur are generally those where prediction fails, e.g. due to a large amount of motion or the appearance of previously hidden background details. Therefore, the prediction error is large in these areas.

In case of lossy encoding the prediction error itself is not available at the video decoder. Only a quantized version is transmitted to the decoder as the residual. Nevertheless, even after quantization a large value of the residual indicates inaccurate prediction. Areas with inaccurate prediction are thus interpreted as being critical for the occurrence of coding artifacts.

Having thus identified areas that are prone for coding artifacts, a mask can be constructed indicating these areas in order to control application of an image enhancement technique accordingly. In this manner, an application of the enhancement technique to areas prone for coding artifacts can be restricted and amplification of coding artifacts prevented.

(First Embodiment)

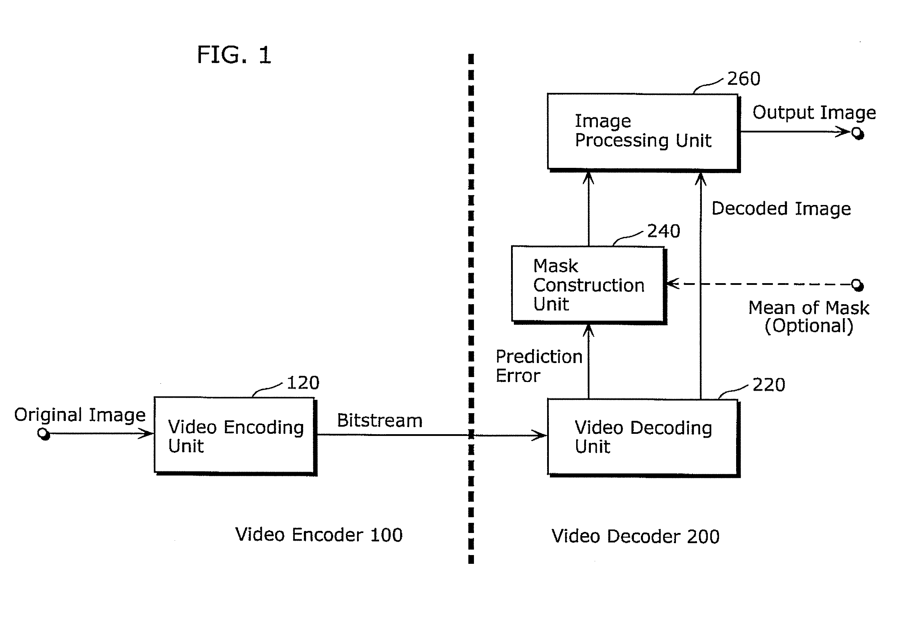

FIG. 1 is a block diagram illustrating an example of configuration of a codec system employing a mask-controlled image enhancement technique in accordance with the first embodiment of the present invention. The codec system illustrated in FIG. 1 includes a video encoder 100 and a video decoder 200.

The video encoder 100 encodes a video sequence. The video encoder 100 includes a video encoding unit 120.

The video encoder 120 receives a video sequence including original images, applies a video encoding method on the received video sequence, and thereby generates a bitstream representing the encoded video sequence. The video encoding unit 120 transmits the generated bitstream to the video decoder 200. The video encoding method may be any conventional prediction-based encoding method, including MPEG-2 and H.264/AVC.

For example, the video encoding unit 120 includes the same elements as those in the video encoder 500 illustrated in FIG. 11. The video encoding unit 120 computes a prediction error of each block such as a macroblock from an input image included in a video sequence according to "Intra" or "Inter" mode. Then, the video encoding unit 120 frequency-transforms and quantizes the computed prediction error, and then entropy-codes the resulting quantized coefficients. Thereby, to the video decoder 200 the video encoding unit 120 transmits the bitstream generated by the entropy coding to represent the encoded video signal.

The video decoder 200 receives the bitstream from the video encoder 100. Then, the video decoder 200 decodes the received bitsteam and performs image enhancement process on decoded images included in the decoded video sequence. Here, a mask is constructed based on prediction error to indicate image areas where the image enhancement process is to be applied. The image enhancement process is applied according to the constructed mask. In order to achieve the above processing, the video decoder 200 includes a video decoding unit 220, a mask construction unit 240, and an image processing unit 260.

The video decoder 220 generates a decoded video sequence by applying the bitstream with a video decoding method corresponding to the video encoding method used by the video encoding unit 120. The video decoding unit 220 provides decoded images generated by the decoding process to the image processing unit 260. In addition, the video decoding unit 220 provides prediction error generated by the decoding process to the mask construction unit 240.

The mask construction unit 240 constructs a mask using the prediction error for generating decoded images. The mask construction unit 240 may further receive a target value for adjusting a mean of the mask. The target value may be set in accordance with a user's preferences or automatically. The target value of the mean is employed to control the overall effect of the image enhancement process. Details of the processing performed by the mask construction unit 240 will be explained below with reference to the corresponding figure.

The image processing unit 260 controls the image enhancement technique using the mask constructed by the mask construction unit 240. The image enhancement technique may for instance be controlled by the following two steps. At the first step, an enhanced image is computed by applying the conventional enhancement technique to a decoded image. At the second step, a weighted sum of the enhanced image and the decoded image is computed in order to generate the final output image. Here, the weighted sum is computed on a pixel-to-pixel basis and the weights at each pixel are taken in accordance with a corresponding mask value.

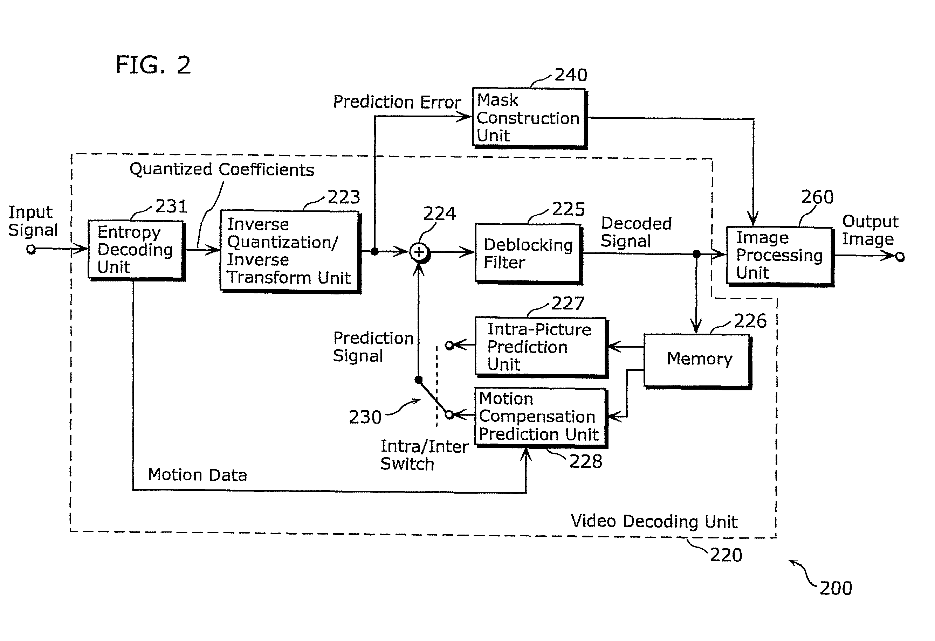

FIG. 2 is a block diagram illustrating an example of a structure of the video decoder 200 in accordance with the first embodiment of the present invention. The video decoder 200 illustrated in FIG. 2 includes the video decoding unit 220, the mask construction unit 240, and the image processing unit 260 as illustrated in FIG. 1. Firstly, the video decoding unit 220 is described in detail.

The video decoding unit 220 includes an entropy decoding unit 231, an inverse quantization and inverse transform unit 223, an adder 224, a deblocking filter 225, a memory 226, an Intra-picture prediction unit 227, a motion compensation prediction unit 228, and an Intra/Inter switch 230. The video decoding unit 220 of FIG. 2 differs from the video decoding unit 620 of FIG. 12 in that the inverse quantization and inverse transform unit 623 is replaced by the inverse quantization and inverse transform unit 223. Here, like elements are denoted by like reference numerals.

The entropy decoding unit 231 decodes input signal such as the bitstream received from the video encoder 100 to separate the bitstream into motion data and quantized coefficients. The entropy decoding unit 231 provides the decoded motion data to the motion compensation prediction unit 228. Furthermore, the entropy decoding unit 231 transforms a one-dimensional string of the quantized coefficients into a two-dimensional array required for inverse transformation. The resulting quantized coefficients in the two-dimensional array are provided to the inverse quantization and inverse transform unit 223.

The inverse quantization and inverse transform unit 223 de-quantizes the quantized coefficients decoded by the entropy decoding unit 231. The inverse quantization and inverse transform unit 223 also inversely transforms the resulting de-quantized coefficients. Thereby, the prediction error transformed in the frequency domain and quantized is recovered to be prediction error in the spatial domain. The inverse quantization and inverse transform unit 223 provides the recovered prediction error to the mask construction unit 240 and the adder 224.

The adder 224 adds the prediction error recovered by the inverse quantization and inverse transform unit 223 to the prediction signal (prediction image) generated by the Intra-picture prediction unit 227 or the motion compensation prediction unit 228 in order to generate decoded signal (decoded image).

The deblocking filter 225 deblocking-filters the decoded image generated by the adder 224. Thereby, blocking artifacts included in the decoded image are reduced. This process of the deblocking filter 225 is optional and may not be applied to decoded images.

The memory 226 is a picture memory holding decoded images deblocking-filtered by the deblocking filter 225.

The Intra-picture prediction unit 227 reads out a decoded image from the memory 226 and performs prediction in "intra" mode based on the readout decoded image to generate a prediction image. The Intra-picture prediction unit 227 makes it possible to decode a current block with reference to only a current picture itself including the current block, not to any previously decoded picture.

The motion compensation prediction unit 228 reads out a decoded image from the memory 226 and performs motion compensation based on the readout decoded image and the motion data decoded by the entropy decoding unit 231 so as to generate a prediction image.

The Intra/Inter switch 230 switches between (i) prediction signal indicating the prediction block (prediction image) generated by the Intra-picture prediction unit 227 and (ii) prediction signal indicating the prediction block (prediction image) generated by the motion compensation prediction unit 228, in order to be provided to the adder 224.

As described above, the video decoding unit 220 in accordance with the first embodiment decodes prediction error included in the encoded bitstream, and adds the decoded prediction error to a prediction image generated by motion compensation in "Intra" or "Inter" mode, thereby reconstructing a decoded image. The video decoding unit 220 also provides the decoded prediction error to the mask construction unit 240 to be used to construct a mask.

Next, the mask construction unit 240 is described in detail.

The mask construction unit 240 constructs a mask employing the prediction error generated by inverse quantization of the inverse quantization and inverse transform unit 223. The mask is a mask value representing a weight coefficient of the enhanced image. Such weight coefficients are used to compute a weighted sum of the enhanced image and the decoded image. The mask construction unit 240 computes a mask value for each predetermined area such as a pixel. Or, the mask construction unit 240 may compute a mask value for each predetermined area such as a block consisting of one or more macroblocks.

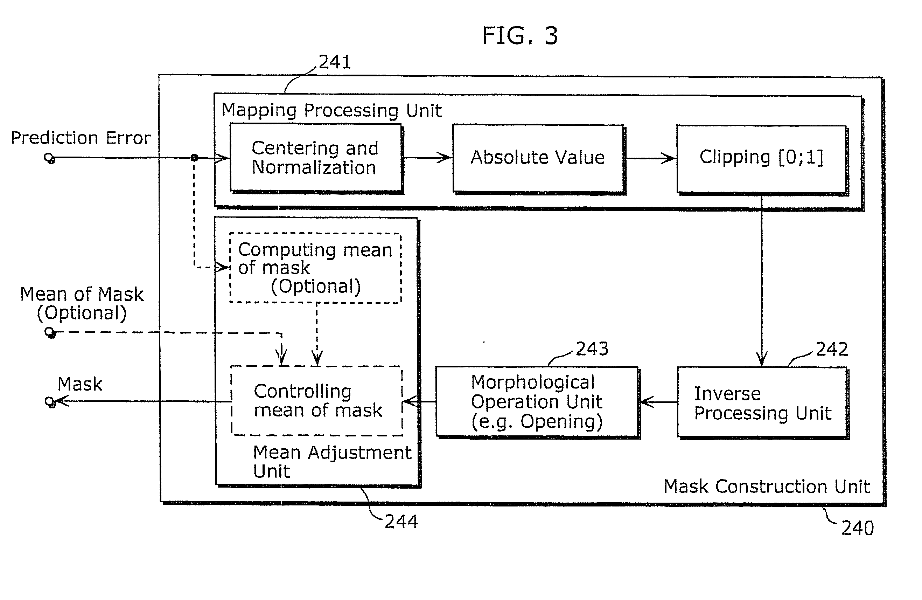

FIG. 3 is a block diagram illustrating an example of a structure of the mask construction unit 240 in accordance with the first embodiment of the present invention. The mask construction unit 240 illustrated in FIG. 3 includes a mapping processing unit 241, an inverse processing unit 242, a morphological operation unit 243, and a mean adjustment unit 244.

The mapping processing unit 241 maps values of the prediction error de-quantized by the inverse quantization and inverse transform unit 223 to a range between 0 and 1 (a range from 0 to 1). This mapping may comprise taking the absolute values of the prediction error. This mapping may also comprise a normalization to ensure temporal consistency of the mask.

In an encoded sequence the structure of the residual can vary a lot from picture to picture, especially if different quantization parameters (QP) are used. B pictures, for example, are generally encoded with a QP offset, so that the residual changes a lot. Therefore the normalization is important for the temporal consistency of the mask. This mapping may further comprise clipping the residual to the range between 0 and 1.

The inverse processing unit 242 performs inverse processing on the prediction error mapped in the range between 0 and 1. In the inverse processing the mapped values are subtracted from 1. This inverse processing is performed to increase the mask values of the mask constructed by the mask construction unit 240 when prediction error has a small value and to decrease the mask values when prediction error has a large value, since the mask values are weight coefficients of an enhanced image. Therefore, if the mask construction unit 240 uses the mask values of the mask constructed by the mask construction unit 240 as weight coefficients for a decoded image, the inverse processing unit 242 is eliminated.

The morphological operation unit 243 applies morphological operations (e.g. opening) to make the spatial structure of the mask more homogeneous.

The mean adjustment unit 244 adjusts mean of the mask. The mean of the mask values applied with the morphological operation are adjusted to be a predetermined mean (target mean). Here, the target mean may be set in accordance with instructions from the outside, such as a user's preferences. Or, the mean adjustment unit 244 may calculate the target mean by an automatic mean computation procedure based on the value of the prediction error. An optimal target mean is computed considering parameters like QP, for example.

It should be noted that the mean adjustment process performed by the mean adjustment unit 244 is optional and not necessarily performed always.

The following describes a method of computing a mask value for each pixel in more detail with reference to mathematical formulas.

In the first embodiment, the mask construction unit 240 constructs the mask from the luminance channel (Y) only. This is because image enhancement process generally enhances only the luma component, because the sharpness impression of the human visual system is mainly dependent on the luminance. However, the masking scheme is not limited only to the luma component, but may also be extended to chroma components or even to other colour spaces.

Firstly, the mapping processing unit 241 normalizes the absolute value of the luminance residual ($Y_{res}$), which is prediction error, based on standard deviation of the prediction error, using the formula 1. (i, j) represents a position of a pixel.

[Formula 1]

$$Y_{res_1}(i,j) = \left| \frac{Y_{res}(i,j)}{5\sqrt{Var\,Y_{res}}} \right|$$ (Formula 1)

It is to be noted that the above normalization is merely exemplary and that any other normalization may also be employed without departing from the present invention.

The mapping processing unit 241 performs clipping and maps the result to a range between 0 and 1. The mapping is done to get the weighting mask in a form that it can be multiplied directly to the enhancement component, where a value of 1 would mean 100% enhancement and a value of 0 would mean no enhancement.

Subsequently, the inverse processing unit 242 performs inverse processing using the formula 2. In more detail, the resulting $Y_{res1}$ is subtracted from 1 to compute a mask value (weight coefficient) of an enhanced image.

[Formula 2]

$$Y_{res_2}(i,j) = 1 - \min\left(Y_{res_1}(i,j), 1\right)$$ (Formula 2)

Next, the morphological operation unit 243 applies morphological operation to the mask value computed in the formula 2. Here, opening (o) using the formula 3 is applied.

[Formula 3]

$$Y_{mask} = S \circ Y_{res_2}$$ (Formula 3)

where S is the chosen structuring element. Preferably, a disk with a diameter of 17 pixels is used as structuring element, but any other disk diameter may likewise be used. Other morphological operators may also be employed, such as top hat filtering, opening followed by closing or only dilation, etc.

Finally the average value adjustment unit 244 adjusts the mean of the mask. Good results can be obtained by using an automatic computation of the desired mean (M), e.g. using the formula 4.

[Formula 4]

$$M = \min\left[0.98, \ \max\left(0.2 + \frac{12}{QP}, \ \frac{\sum_{i,j}|Y_{res}(i,j)|}{10 \cdot width \cdot height}\right)\right]$$

(Formula 4)

with QP the quantization parameter used for encoding, $Y_{res}$ the unprocessed residual, and *width* and *height* the resolution of the sequence. The mean may be adjusted by pointwise multiplication and clipping above one.

As described above, the mask construction unit 240 determines weight coefficients so that a stronger weight is assigned to an enhanced image for an image area having a smaller absolute value of prediction error than an image area having a larger absolute value of prediction error. It should be noted that the mask constructed by computing a mask value of each pixel in the mask construction unit 240 is used by the image processing unit 260 to directly weight a degree of application of the enhancement process.

Next, the image processing unit 260 is described in detail.

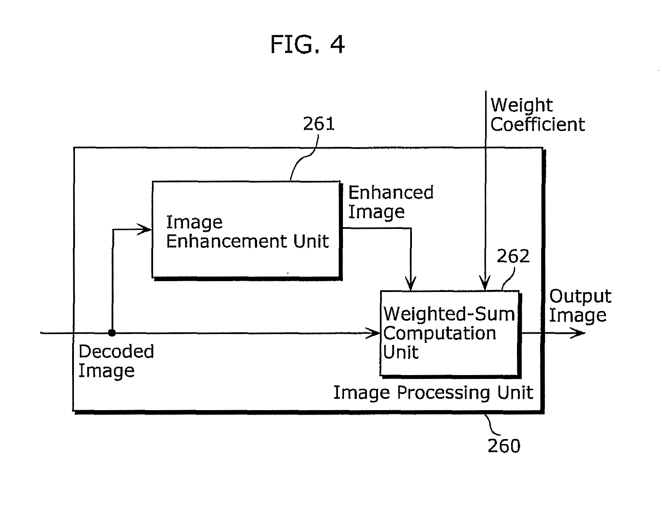

FIG. 4 is a block diagram illustrating an example of a detailed structure of the image processing unit 260 in accordance with the first embodiment of the present invention. The image processing unit 260 illustrated in FIG. 4 includes an image enhancement unit 261 and a weighted-sum computation unit 262.

The image enhancement unit 261 applies process for enhancing image quality to the decoded image provided from the deblocking filter 225 in order to generate an enhanced image. More specifically, the image enhancement process using image statistical properties is applied as described with reference to FIGS. 13 to 15. For example, the image enhancement process based on texture generation algorithm using parameters transmitted from encoder is applied. Or, any process such as high-pass filtering, sharpness filtering, or local contrast enhancement such as unsharp masking can be used. Lowpass filtering can be also used. Here, since the image enhancement process is applied in the entire enhanced image, coding artifacts would occur in an image area having large prediction error.

The weighted-sum computation unit 262 sums weights of the enhanced image and the decoded image based on the weight coefficient determined by the mask construction unit 240 to generate an output image.

With reference to the following formula 5, the weighted-sum computation unit 262 uses the above-described mask to compute a weighted sum of the (unprocessed) decoded image $Y_{dec}$ and the (processed) decoded image $Y_{enh}$ to which the enhancement technique has been applied.

[Formula 5]

$$Y_{out}(i,j) = Y_{enh}(i,j) \cdot Y_{mask}(i,j) + Y_{dec}(i,j) \cdot [1 - Y_{mask}(i,j)]$$

(Formula 5)

As described above, the decoded image is weighted more strongly in an image area having larger prediction error, while the enhanced image is weighted more strongly in an image area having smaller prediction error. As a result, occurrence of coding artifacts is prevented and thereby high-quality output image $Y_{out}$ can be generated.

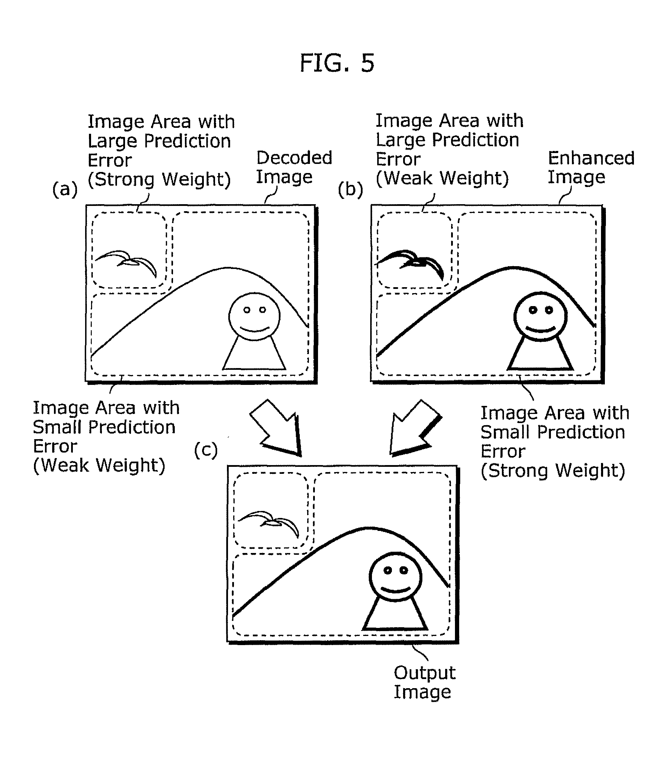

The following describes details of the image enhancement process performed by the image processing unit 260 with reference to an example of an image illustrated in FIG. 5. FIG. 5 is a schematic diagram illustrating the image enhancement process in accordance with the first embodiment of the present invention.

FIG. 5 (a) is a diagram showing an example of the decoded image. The decoded image illustrated in FIG. 5 (a) is a picture generated by the adder 224 and filtered by the deblocking filter 225. As illustrated in FIG. 5 (a), the decoded image is assumed to have an image area with large prediction error and an image area with small prediction error. For example, an image area having large motion is difficult to be predicted, so that such image area has large prediction error.

FIG. 5 (b) is a diagram showing an example of the enhanced image. The enhanced image illustrated in FIG. 5 (b) is a picture generated by applying the image enhancement process to the entire decoded image of FIG. 5 (a) regardless of values of prediction error of the image. Thereby, the enhanced image of FIG. 5 (b) would have coding artifacts in the image area having large prediction error and therefore does not have sufficient image quality.

The mask construction unit 240 determines weight coefficients for the decoded image of FIG. 5 (a) to be strong in the image area with large prediction error and to be weak in the image area with small prediction error. The mask construction unit 240 also determines weight coefficients for the enhanced image of FIG. 5 (b) to be weak in the image area with large prediction error and to be strong in the image area with small prediction error.

The weighted-sum computation unit 262 computes the weighted sum in accordance with the weight coefficients determined as described above and pixel values of the corresponding image area in order to generate an output image as illustrated in FIG. 5 (c). Thereby, in the output image of FIG. 5 (c) an image area having large prediction error has strong influence of the decoded image of FIG. 5 (a) and an image area having small prediction error has strong influence of the enhanced image of FIG. 5 (b).

As described above, the image enhancement process in the first embodiment specifies (i) an image area where coding artifacts are likely to occur due to the application of the image enhancement process and (ii) an image area where coding artifacts are not likely to occur even with the application of the image enhancement process. The image area where coding artifacts are likely to occur is weighted strongly in a decoded image not applied with the image enhancement process, and the image area where coding artifacts are not likely to occur is weighted strongly in an enhanced image applied with the image enhancement process. Then, weighted sum of these two images is computed to generate an output image. Thereby, it is possible to generate an output image with less coding artifacts and high image quality.

The following describes the process for enhancing image quality of a decoded image among the processing performed by the video decoder 200 in accordance with the first embodiment.

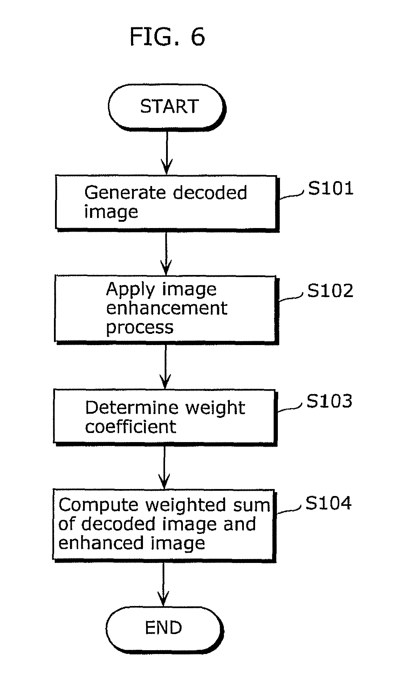

FIG. 6 is a flowchart of the processing performed by the video decoder 200 in accordance with the first embodiment of the present invention.

Firstly, a decoded image is generated from an encoded bitstream on a block-to-block basis (S101). More specifically, the entropy decoding unit 231 decodes the bitstream and provides the resulting quantized coefficients to the inverse quantization and inverse transform unit 223. The inverse quantization and inverse transform unit 223 de-quantizes the quantized coefficients and inversely transforms the resulting de-quantized coefficients to recover prediction error. Then, the adder 224 adds the prediction error to the prediction image generated by the Intra-picture prediction unit 227 or the motion compensation prediction unit 228 to generate a decoded image. Here, the deblocking filter 225 performs deblocking filtering, if necessary.

Next, the image enhancement unit 261 applies the image enhancement process to the generated decoded image to enhance image quality, thereby generating an enhanced image (S102).

Then, the mask construction unit 240 constructs a mask by computing a mask value of each pixel, and determines weight coefficients for computing a weighted sum of the enhanced image and the decoded image (S103). The generation of the enhanced image (S102) may be performed after the determination of the weight coefficients (S103), and vice versa.

Finally, the weighted-sum computation unit 262 computes a weighted sum of the enhanced image and the decoded image in accordance with the determined weight coefficients to generate an output image (S104).

As described above, the video decoder 200 in accordance with the first embodiment determines weight coefficients to be used to compute a weighted sum of the image applied with the enhancement process (enhanced image) and the image not applied with the enhancement process (decoded image) based on the prediction error included in the encoded bitstream. In more detail, in an image area with large prediction error a weight of the decoded image is set strong, and in an image area with small prediction error a weight of the enhanced image is set strong. Thereby, an image area with large prediction error is likely to have coding artifacts due to the enhancement process, while an image area with small prediction error is unlikely to have coding artifacts even with the enhancement process. Therefore, it is possible to prevent coding artifacts.

As mentioned above, the mask is used only in the video decoder to control influence of the image enhancement technology. Thus, the image enhancement process in the first embodiment is sheer post processing independent from the video encoder.

(Second Embodiment)

The video encoding method and the video decoding method in the second embodiment further enhance image quality of decoded images using statistical properties of original images. A mask is constructed based on a value of prediction error also in encoding processing. Statistical properties of an original image are analyzed and the resulting statistical properties are applied to the mask to compute statistical parameters. In decoding processing, the statistical properties obtained by the analysis are used to apply post processing to a decoded image. Thereby, image quality of the decoded image can be enhanced more.

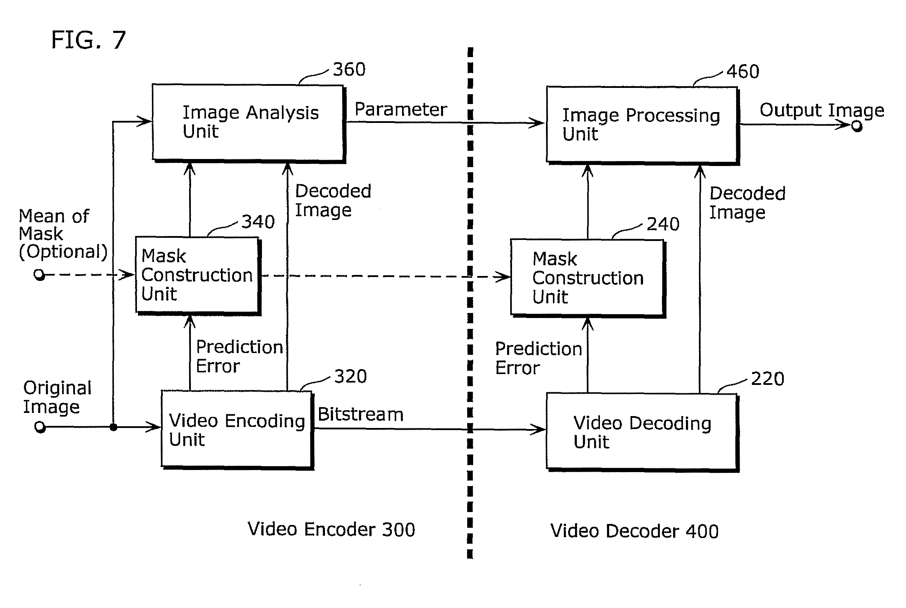

FIG. 7 is a block diagram illustrating an example of configuration of a codec system employing a mask-controlled image enhancement technique in accordance with the second embodiment of the present invention. The codec system of FIG. 7 includes a video encoder 300 and a video decoder 400. Hereinafter, like elements in the image codec systems in the first and second embodiments are denoted by like reference numerals, a repetition of their detailed explanation thus being omitted.

The video encoder 300 illustrated in FIG. 7 transmits (i) encoded data generated by encoding a video sequence including original images and (ii) parameters indicating statistical properties of the original images, to the video decoder 400. In order to achieve the above processing, the video encoder 300 includes a video encoding unit 320, a mask construction unit 340, and an image analysis unit 360.

The video encoding unit 320 receives a video sequence including original images and applies video encoding such as the H.264/AVC standard to the received video sequence in order to encode the video sequence on a block-to-block basis. More specifically, the video encoding unit 320 encodes prediction error that is a difference between an original image and a prediction image. Furthermore, the video encoding unit 320 provides the prediction error computed in the encoding to the mask construction unit 340. The video encoding unit 320 also provides a locally decoded image decoded in the video encoding unit 320 to the image analysis unit 360.

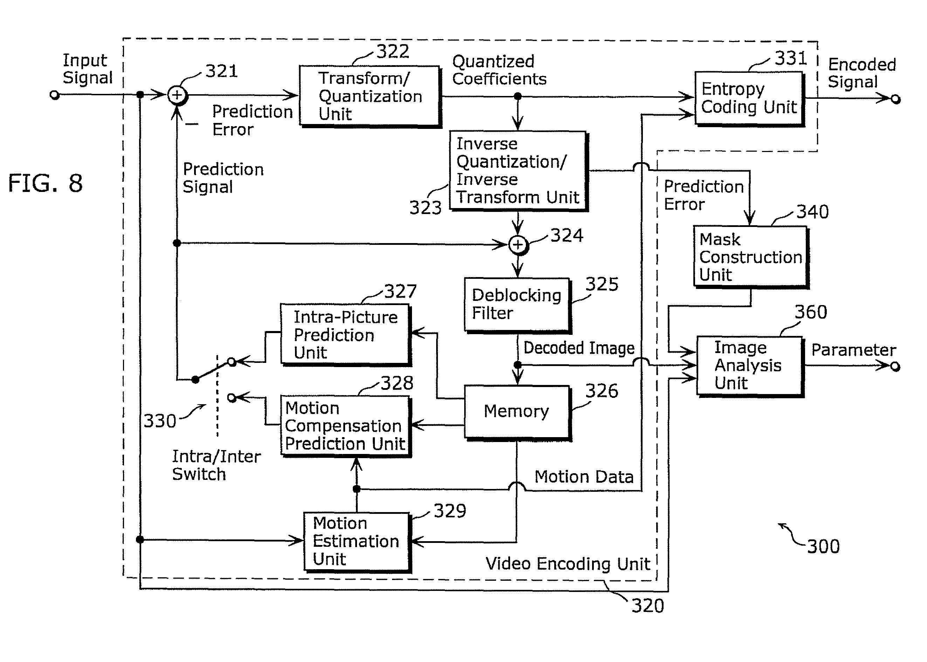

FIG. 8 is a block diagram illustrating an example of a structure of the video encoder 300 in accordance with the second embodiment of the present invention. The video encoder 300 of FIG. 8 includes a video encoding unit 320, a mask construction unit 340, and an image analysis unit 360 as also illustrated in FIG. 7. Firstly, the video encoding unit 320 is described in detail.

The video encoding unit 320 includes a subtractor 321, a transform and quantization unit 322, an inverse quantization and inverse transform unit 323, an adder 324, a deblocking filter 325, a memory 326, an Intra-picture prediction unit 327, a motion compensation prediction unit 328, a motion estimation unit 329, an Intra/Inter switch 330, and an entropy coding unit 331. The video encoding unit 320 differs from the video encoder 500 of FIG. 11 in that the inverse quantization and inverse transform unit 523 is replaced by the inverse quantization and inverse transform unit 323 and the deblocking filter 525 is replaced by the deblocking filter 325. Here, like elements are denoted by like reference numerals.

The subtractor 321 computes a difference (prediction error) between input signal (input image) and prediction signal (prediction image). More specifically, the subtractor 321 subtracts a prediction block generated by the Intra-picture prediction unit 327 or the motion compensation prediction unit 328 from a current block in an input image included in the input signal so as to compute prediction error.

The transform and quantization unit 322 transforms the prediction error computed by the subtractor 321 from the spatial domain to the frequency domain. For example, the transform and quantization unit 322 employs an orthogonal transformation such as a two-dimensional discrete cosine transform (DCT) or an integer version thereof on the prediction error. The transform and quantization unit 322 quantizes transformation coefficients generated by the transformation. The two-dimensional array of transformation coefficients generated by the quantization is to be converted into a one-dimensional string. This conversion is done by scanning the array in a predetermined sequence in order to provide the one-dimensional string of quantized transformation coefficients to the entropy coding unit 331. This quantization can reduce the amount of data that has to be encoded.

The inverse quantization and inverse transform unit 323 de-quantizes the quantized coefficients generated by the quantization/transformation unit 322. Furthermore, the inverse quantization and inverse transform unit 323 applies an inverse transformation on the de-quantized coefficients. Thereby, the prediction error transformed to the frequency domain and quantized can be recovered to be the prediction error in the spatial domain. The inverse quantization and inverse transform unit 323 provides the recovered prediction error to the mask construction unit 340.

The adder 324 adds the prediction error recovered by the inverse quantization and inverse transform unit 323 to the prediction signal (prediction block) generated by the Intra-picture prediction unit 327 or the motion compensation prediction unit 328 to form a locally decoded image.

The deblocking filter 325 deblocking-filters the locally decoded image. Thereby, the deblocking filter 325 reduces blocking artifacts in the locally decoded image. The deblocking filter 325 also provides the deblocking-filtered locally decoded image to the image analysis unit 360. It should be noted that this process of the deblocking filter 325 is optional and may not be applied to locally decoded images.

The memory 326 is a picture memory holding locally decoded images deblocking-filtered by the deblocking filter 325.

The Intra-picture prediction unit 327 reads out a locally decoded image from the memory 326 and performs prediction in "Intra" mode based on the readout locally decoded image to generate a prediction block. In the "Intra" mode, prediction process is performed using a block already encoded in the same image to generate the prediction block. In other words, in the "Intra" mode, the Intra-picture prediction unit 327 makes it possible to encode a current block with reference to only a current picture itself including the current block, not to any previously decoded picture.

The resulting Intra encoded images (I-type images) provide error resilience for the encoded video sequence. Further, entry points into bit streams of encoded data are provided by the I-type images in order to enable a random access, i.e. to access the I-type images within the sequence of encoded video images.

The motion compensation prediction unit 328 reads out a locally decoded image from the memory 326 and performs motion compensation based on the readout locally decoded image and a motion vector determined by the motion estimation unit 329 so as to generate a prediction image.

The motion estimation unit 329 reads out a locally decoded image from the memory 326 and performs motion estimation using the readout locally decoded image and an input image included in the input signal so as to determine a motion vector. The motion vector is a two-dimensional vector representing a pixel displacement between the current block and the corresponding block in the locally decoded image. Here, motion data indicating the determined motion vector is provided to the entropy coding unit 331 that inserts the motion data to an output bitstream.

The Intra/Inter switch 330 switches between (i) prediction signal indicating the prediction block generated by the Intra-picture prediction unit 327 and (ii) prediction signal indicating the prediction block generated by the motion compensation prediction unit 328, in order to be provided to the subtractor 321 and the adder 324. In other words, the Intra/Inter switch 330 switches (i) processing to be performed by the Intra-picture prediction unit 327 and (ii) processing to be performed by the motion compensation prediction unit 328. That is, the Intra/Inter switch 330 switches between (i) the "Intra" mode and (ii) the "Inter" mode in order to encode the current block.

The entropy coding unit 331 entropy-codes (i) the quantized coefficients quantized by the transform and quantization unit 322 and (ii) the motion data generated by the motion estimation unit 329 to generate encoded signal to be outputted as an output bitstream. In more detail, the entropy coding unit 331 compresses a one-dimensional sequence of quantized coefficients to a series of number pairs called run levels. Then, the run-level sequence is encoded with binary code words of variable length. The code is optimized to assign shorter code words to most frequent run-level pairs occurring in typical video images. The resulting bitstream is multiplexed with the motion data and transmitted to the video decoder 400 or the like or stored on a recording medium as an output bitstream.

As described above, the video encoding unit 320 in the second embodiment computes, transforms, and quantizes prediction error to encode the resulting prediction error. Furthermore, the video encoding unit 320 provides prediction error that is recovered by inverse quantization and inverse transformation to the mask construction unit 340.

The mask construction unit 340 constructs a mask employing the prediction error generated by inverse quantization of the inverse quantization and inverse transform unit 323. More specifically, the mask construction unit 340 performs the same processing as that of the mask construction unit 240 (as seen in FIG. 3) in the first embodiment in order to compute a mask value of each pixel to construct a mask. The mask construction unit 340 provides the resulting mask to the image analysis unit 360. It should be noted that the mask construction unit 340 may compute a mask value for each predetermined area such as a block consisting of one or more macroblocks.

Here, information regarding the constructed mask may be transmitted to the mask construction unit 240 in the video decoder 400. The mask construction block 340 may further receive a target value for the mean of the mask.

The image analysis unit 360 analyzes statistical properties of an original image or a difference image between an original image and a locally decoded image so as to compute statistical parameters. The statistical parameters are employed in the video decoder 400 to control the image enhancement process. Examples for such enhancement techniques have been provided above in conjunction with FIGS. 13 to 15.

The statistical properties determined by the image analysis unit 360 may correspond to those described above in conjunction with FIG. 15 and may comprise spatial properties of the images (correlations) and properties of the intensity histograms (marginal statistics). Specifically, values of the autocorrelation function in a neighborhood of zero may be determined, as well as moments of intensity and/or color distributions, including mean, variance, skewness, and kurtosis of the intensity distribution. To this end, the methods known in the art for estimating random variables may be employed.

The image analysis unit 360 firstly analyzes statistical properties of an original image or a difference image. Then, when statistical parameters are determined from the analyzed statistical properties, the statistical properties are weighted in accordance with the mask constructed by the mask construction unit 340. The mask value has a larger value for the smaller prediction error, and has a smaller value for the larger prediction error. Thereby, it is possible to increase influence for an image area with small prediction error and to decrease influence for an image area with large prediction error. As a result, statistical properties of the image area with small prediction error are emphasized to determine statistical parameters. Such statistical parameters are determined for each Group of Pictures (GOP), each picture, or each slice, for example.

For example, every pixel of the image is weighted by a corresponding mask value when computing descriptors of the marginal image statistics, such as moments of pixel histograms. The weighted first moment (mean of pixel value) and the weighted second moment (variance of pixel value) may for instance be computed using the following formulas 6 and 7.

[Formula 6]

$$\mathrm{E}\,Y = \frac{\displaystyle\sum_{i,j} Y_{mask}(i,j)\,Y(i,j)}{\displaystyle\sum_{i,j} Y_{mask}(i,j)} \qquad \text{(Formula 6)}$$

[Formula 7]

$$\mathrm{Var}\, Y = \frac{\sum_{i,j} Y_{mask}(i,j)\left[Y(i,j)^2 - (\mathrm{E}\, Y)^2\right]}{\sum_{i,j} Y_{mask}(i,j)}$$

(Formula 7)

It is also possible to analyze statistical properties of both the original image and the difference image.

As described above, the video encoder 300 in the second embodiment analyzes statistical properties of an original or difference image and weights the resulting statistical properties for each pixel according to a value of the prediction error computed for each pixel in order to determine statistical parameters. The image area with large prediction error has low reliability in prediction, and statistical properties determined from the image area also have low reliability. Therefore, as described above, the analyzed statistical properties are weighted not to influence statistical parameters. As a result, the decoding side applies post processing using such statistical parameters to generate high-quality decoded images.

Next, the structure of the video decoder 400 of FIG. 7 is described in more detail with reference to a corresponding figure. As described above, the video decoder 400 applies post processing on decoded image using the statistical parameters computed by the video encoder 300 to generate high-quality images.

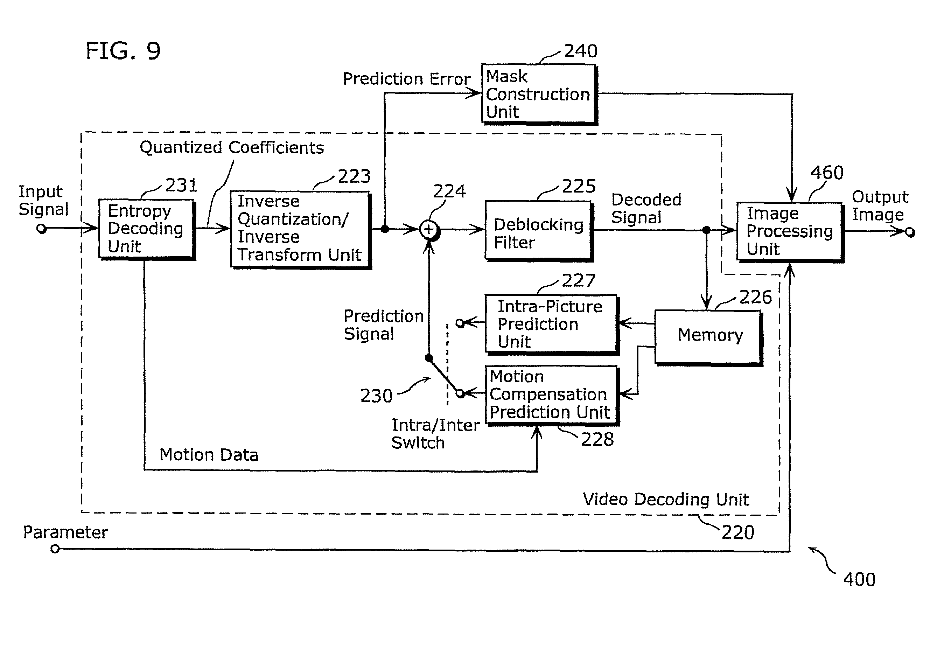

FIG. 9 is a block diagram illustrating an example of a structure of the video decoder 400 in accordance with the second embodiment of the present invention. The video decoder 400 illustrated in FIG. 9 includes a video decoding unit 220, a mask construction unit 240, and an image processing unit 460 illustrated in FIG. 7. This video decoder 400 is similar to the video decoder 200 of the first embodiment, except that it applies image post-processing that relies on additional parameters provided by the video encoder 300. In other words, the video decoder 400 differs from the video decoder 200 of the first embodiment in that the image processing unit 260 is replaced by the image processing unit 460. Hence, in FIGS. 7 and 9, like elements are denoted by like reference numerals, a repetition of their detailed explanation thus being omitted.

The image processing unit 460 of FIGS. 7 and 9 merely differs from the image processing unit 260 of FIGS. 1 and 2 in that parameters are provided from the video encoder. The image processing unit 460 thus applies an image enhancement technique that relies on additional statistical parameters provided by the video encoder, such as the techniques described with reference to FIGS. 13 to 15. For instance, the image processing unit 460 employs the statistical parameters for reconstructing image components, such as high-frequency components, that are missing in the decoded image due to lossy compression (encoding error).

As described above, the video decoder 400 in the second embodiment can generate decoded image having higher image quality by performing the image enhancement process using the statistical parameters.

The following describes especially the analysis of image statistical properties among the processing performed by the video encoder 300 of the second embodiment.

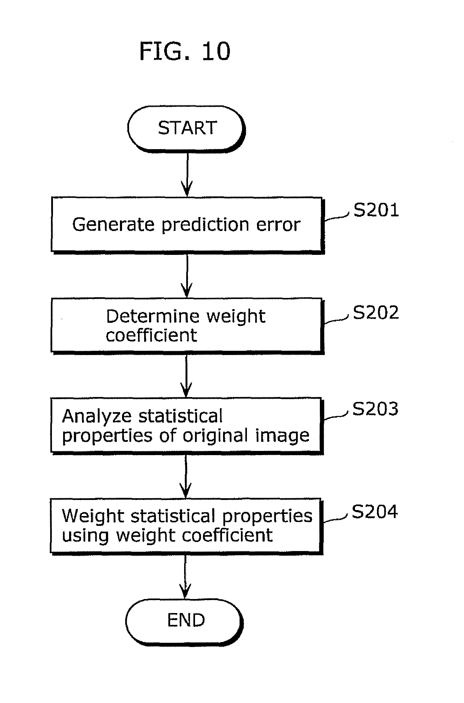

FIG. 10 is a flowchart of the processing performed by the video encoder 300 in accordance with the second embodiment of the present invention.

Firstly, the video encoding unit 320 generates prediction error (S201). More specifically, the subtractor 321 computes a difference between (i) an original image (input image) included in a video sequence and (ii) a prediction image generated by the Intra-picture prediction unit 327 or the motion compensation prediction unit 328 in order to generate prediction error. Then, the transform and quantization unit 322 transforms and quantizes the prediction error computed by the subtractor 321. The inverse quantization and inverse transform unit 323 de-quantizes and inversely transforms the quantized coefficients generated by the quantization/transformation unit 322 to generate prediction error. Thereby, the video encoding unit 320 provides the prediction error generated by de-quantizing the quantized prediction error to the mask construction unit 340.

Next, the mask construction unit 340 computes a mask value using the prediction error generated by the video encoding unit 320 to determine a weight coefficient for each pixel (S202). In more detail, the mask construction unit 340 firstly normalizes an absolute value of prediction error of each pixel using the formula 1 to map the prediction error in a range between 0 and 1. Then, the mapped prediction error is applied with inverse processing using the formula 2. The resulting mask value of each pixel is small when the pixel has large prediction error, and large when the pixel has small prediction error. The mask construction unit 340 applies a morphological operation to adjust the means of the mask if desired. In the mask construction unit 340 the resulting mask value is divided by a sum of all mask values to determine a weight coefficient for each pixel.

Next, the image analysis unit 360 analyzes statistical properties of an original image (S203). Then the image analysis unit 360 weights the statistical properties for each pixel using the weight coefficient to compute statistical parameters (S204). The analysis is used to compute statistical parameters employed in the image enhancement technology as described with reference to FIGS. 13 to 15.

As described above, the video encoding method and the video decoding method in the second embodiment analyzes statistical properties of an original or difference image and weights the resulting statistical properties for each predetermined image area based on the prediction error computed for the image area. As a result, it is possible to prevent influence of the image area where coding artifacts are likely to occur. The post processing such as the image enhancement process is applied to decoded images using statistical parameters obtained by the analysis, so that subjective image quality of decoded images can be enhanced without amplifying coding artifacts.

Although only some exemplary embodiments of the video decoding method, the video encoding method, and devices thereof in accordance with the present invention have been described in detail above, the present invention is not limited to them. Those skilled in the art will be readily appreciated that various modifications in the embodiments or combinations of elements in the different embodiments are possible without materially departing from the novel teachings and advantages of the present invention.

For example, although it has been described that the mapping processing unit 241 maps absolute values of prediction error using the formula 1 or the like, it is also possible to compute an absolute value of the prediction error and maps the absolute value to, for example, a range between 0 and 255. Then, the mapped absolute value of the prediction error may be divided by 255 or shifted down by 8 bits to map the absolute value in a range between 0 and 1.

It should be noted that the present invention can be implemented not only as the video decoding method, the video encoding method, and devices thereof, but also as: a program causing a computer to execute the video decoding method and the video encoding method described in the embodiments. Of course, the program can be distributed by a recording medium such as a Compact Disc-Read Only Memory (CD-ROM) or by a transmission medium such as the Internet. Furthermore, the present invention may be implemented as information, data, or signals indicating the program. The program, information, data, or signals can be distributed via a communications network such as the Internet.

It should also be noted that a part or all of the elements in the video decoder and the video encoder may be integrated into a system LSI. The system LSI is a super multifunctional LSI that is a single chip on which a plurality of elements are integrated. Examples of the system LSI is a computer system having a microprocessor, a ROM, and a random access memory (RAM), and the like.

**Industrial Applicability**

The video decoding method and the video encoding method of the present invention have effects of generating high-quality image by preventing coding artifacts. The video decoding method and the video encoding method can be used by video decoders, video encoders, video cameras, and mobile telephones with camera functions, for example.

**Claims**

1.  A video decoding method of decoding an encoded stream generated by encoding a prediction error that is a difference between an original image and a prediction image, said video decoding method comprising:

    decoding the prediction error included in the encoded stream;
    adding the prediction error decoded in said decoding to a previously-generated decoded image so as to generate a decoded image;
    applying a process of enhancing image quality to the decoded image generated in said adding to generate an enhanced image;
    determining a weight coefficient for each of predetermined image areas based on the prediction error decoded in said decoding; and
    computing a weighted sum of the decoded image and the enhanced image in accordance with the weight coefficient determined in said determining so as to generate an output image.

2.  The video decoding method according to Claim 1,
    wherein in said determining the weight coefficient is determined so that the enhanced image is weighted more strongly (i) in one of the predetermined image areas where an absolute value of the prediction error is small than (ii) in another one of the predetermined image areas where an absolute value of the prediction error is large.

3. The video decoding method according to Claim 2,
   wherein said determining includes:

   computing a mask value for each of the predetermined image areas by mapping the absolute value of the prediction error in a range between 0 and 1; and
   setting the mask value as the weight coefficient for the decoded image, and setting one minus the mask value as the weight coefficient for the enhanced image.

4. The video decoding method according to Claim 3,
   wherein in said computing of the mask value, the absolute value of the prediction error is mapped in the range between 0 and 1 in accordance with a standard deviation of the prediction error.

5. The video decoding method according to Claim 3,
   wherein in said computing of the mask value, a morphological process is applied to the absolute value mapped so as to compute the mask value for each of the predetermined image areas.

6. The video decoding method according to Claim 3,
   wherein said computing of the mask value includes adjusting a mean of a plurality of mask values including the mask value to be a predetermined target value.

7. The video decoding method according to Claim 2,
   wherein the encoded stream includes parameter data indicating statistical properties of the original image, and
   in said enhancing, the decoded image is processed in accordance with the parameter data so as to generate the enhanced image.

8. The video decoding method according to Claim 7,
   wherein in said enhancing, the decoded image is processed in accordance with a texture generation algorithm using the parameter data so as to generate the enhanced image.

9. The video decoding method according to Claim 2,
   wherein in said enhancing, sharpening filter is applied to the decoded image.

10. The video decoding method according to Claim 2,
    wherein in said enhancing, one of a high-pass filter or a low-pass filter is applied to the decoded image.

11. The video decoding method according to Claim 2,
    wherein in said determining of the weight coefficient, the weight coefficient is determined for each pixel.

12. A video encoding method of encoding a prediction error that is a difference between an original image and a prediction image and computing a statistical parameter of the original image, said video encoding method comprising:

    computing the prediction error;
    determining a weight coefficient for each of predetermined image areas based on the prediction error computed in said computing; and
    computing the statistical parameter by analyzing statistical properties of the original image and weighting the statistical properties of each of the predetermined image areas using the weight coefficient.

13. The video encoding method according to Claim 12,
    wherein in said determining, the weight coefficient is determined so that (i) one of the predetermined image areas where an absolute value of the prediction error is small is weighted more strongly than (ii) another one of the predetermined image areas where an absolute value of the prediction error is large.

14. The video encoding method according to Claim 13,
    wherein said determining of the weight coefficient includes
    computing a mask value for each of the predetermined image areas by mapping the absolute value of the prediction error in a range between 0 and 1.

**15.** A video decoding apparatus that decodes an encoded stream generated by encoding a prediction error that is a difference between an original image and a prediction image, said video decoding apparatus comprising:

a decoding unit configured to decode the prediction error included in the encoded stream;
an adding unit configured to add the prediction error decoded by said decoding unit to a previously-generated decoded image so as to generate a decoded image;
an image enhancement unit configured to apply a process of enhancing image quality to the decoded image generated by said adding unit to generate an enhanced image;
a weight coefficient determination unit configured to determine a weight coefficient for each of predetermined image areas based on the prediction error decoded by said decoding unit; and
a weighted-sum computation unit configured to compute a weighted sum of the decoded image generated by said adding unit and the enhanced image generated by said image enhancement unit in accordance with the weight coefficient determined by said weight determination unit so as to generate an output image.

**16.** A video encoding apparatus that encodes a prediction error that is a difference between an original image and a prediction image and computing a statistical parameter of the original image, said video encoding apparatus comprising:

a prediction error computation unit configured to compute the prediction error;
a weight coefficient determination unit configured to determine a weight coefficient for each of predetermined image areas based on the prediction error computed by said prediction error computation unit; and
a parameter computation unit configured to compute the statistical parameter by analyzing statistical properties of the original image and weighting the statistical properties of each of the predetermined image areas using the weight coefficient.

**17.** A program for a video decoding method of decoding an encoded stream generated by encoding a prediction error that is a difference between an original image and a prediction image, said program causing a computer to execute:

decoding the prediction error included in the encoded stream;
adding the prediction error decoded in said decoding to a previously-generated decoded image so as to generate a decoded image;
applying a process of enhancing image quality to the decoded image generated in said adding to generate an enhanced image;
determining a weight coefficient for each of predetermined image areas based on the prediction error decoded in said decoding; and
computing a weighted sum of the decoded image and the enhanced image in accordance with the weight coefficient determined in said determining so as to generate an output image.

**18.** An integrated circuit that decodes an encoded stream generated by encoding a prediction error that is a difference between an original image and a prediction image, said integrated circuit comprising:

a decoding unit configured to decode the prediction error included in the encoded stream;
an adding unit configured to add the prediction error decoded by said decoding unit to a previously-generated decoded image so as to generate a decoded image;
an image enhancement unit configured to apply a process of enhancing image quality to the decoded image generated by said adding unit to generate an enhanced image;
a weight coefficient determination unit configured to determine a weight coefficient for each of predetermined image areas based on the prediction error decoded by said decoding unit; and
a weighted-sum computation unit configured to compute a weighted sum of the decoded image generated by said adding unit and the enhanced image generated by said image enhancement unit in accordance with the weight coefficient determined by said weight determination unit so as to generate an output image.

# FIG. 1

**Video Encoder 100**

Original Image → **Video Encoding Unit** 120 → Bitstream →

**Video Decoder 200**

Bitstream → **Video Decoding Unit** 220

**Video Decoding Unit** → Prediction Error → **Mask Construction Unit** 240

Mean of Mask (Optional) ⇢ **Mask Construction Unit**

**Mask Construction Unit** → **Image Processing Unit** 260

**Video Decoding Unit** → Decoded Image → **Image Processing Unit**

**Image Processing Unit** → Output Image

## FIG. 2

EP 2 207 358 A1

## FIG. 3

Mask Construction Unit — 240

Mapping Processing Unit — 241

Prediction Error → Centering and Normalization → Absolute Value → Clipping [0;1]

Computing mean of mask (Optional)

Mean of Mask (Optional)

Mask ← Controlling mean of mask ← Morphological Operation Unit (e.g. Opening) — 243 ← Inverse Processing Unit — 242

Mean Adjustment Unit — 244

EP 2 207 358 A1

# FIG. 4

261

Weight
Coefficient

Enhanced
Image

Image
Enhancement Unit

262

Weighted-Sum
Computation
Unit

Output
Image

Decoded
Image

Image Processing Unit

260

# FIG. 5

(a) Image Area with Large Prediction Error (Strong Weight)

Decoded Image

Image Area with Small Prediction Error (Weak Weight)

(b) Image Area with Large Prediction Error (Weak Weight)

Enhanced Image

Image Area with Small Prediction Error (Strong Weight)

(c)

Output Image

# FIG. 6

START

Generate decoded image — S101

Apply image enhancement process — S102

Determine weight coefficient — S103

Compute weighted sum of decoded image and enhanced image — S104

END

FIG. 7

Video Encoder 300

Video Decoder 400

EP 2 207 358 A1

FIG. 8

Input Signal

321

322
Transform/ Quantization Unit

Quantized Coefficients

331
Entropy Coding Unit

Encoded Signal

Prediction Error

Prediction Signal

Inverse Quantization/ Inverse Transform Unit

323

Prediction Error

340
Mask Construction Unit

324

327
Intra-Picture Prediction Unit

Deblocking Filter

325

Decoded Image

360
Image Analysis Unit

Parameter

330

328
Motion Compensation Prediction Unit

Memory

326

Intra/Inter Switch

329
Motion Estimation Unit

Motion Data

Video Encoding Unit

320

300

FIG. 9

EP 2 207 358 A1

# FIG. 10

START

Generate prediction error ⎯ S201

Determine weight coefficient ⎯ S202

Analyze statistical properties of original image ⎯ S203

Weight statistical properties using weight coefficient ⎯ S204

END

FIG. 11

EP 2 207 358 A1

## FIG. 12

EP 2 207 358 A1

# FIG. 13

S301 — Separate input image into first and second sub-band components

S302 — Analyze high-frequency component and compute texture parameter

S303 — Encode texture parameters

S304 — Encode low-frequency component by conventional data representation method

encoded image data

S305 — Decode low-frequency component by conventional data representation method

S306 — Decode texture parameters

S307 — Synthesize texture from texture parameters and generate high-frequency component

S308 — Compose output image from low-frequency and high-frequency sub-band components

## FIG. 14

S401 — Construct steerable pyramid from original texture image

↓

S402 — Compute marginal statistics descriptors at each level of the pyramid incl. entire texture image

↓

S403 — Compute autocorrelation of lowpass images at each level of the pyramid

↓

S404 — Compute crosscorrelation of coefficients at adjacent positions, orientations, and scales

S409 — Impose image statistics

↑

S408 — Collapse steerable pyramid into synthesized texture image

↑

S407 — Impose statistical constraints described by texture parameters to each level of the pyramid

↑

S406 — Construct steerable pyramid

↑

S405 — Generate white noise image

texture parameters

FIG. 15

EP 2 207 358 A1

## INTERNATIONAL SEARCH REPORT

| | International application No. |
|---|---|
| | PCT/JP2008/002924 |

A. CLASSIFICATION OF SUBJECT MATTER
*H04N7/32(2006.01)i*

According to International Patent Classification (IPC) or to both national classification and IPC

B. FIELDS SEARCHED

Minimum documentation searched (classification system followed by classification symbols)
H04N7/24-7/68

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 8-274996 A (Matsushita Electric Industrial Co., Ltd.), 18 October, 1996 (18.10.96), Full text; all drawings (Family: none) | 1-18 |
| A | JP 2005-513968 A (Koninklijke Philips Electronics N.V.), 12 May, 2005 (12.05.05), Full text; all drawings & WO 2003/056835 A1 & US 2003/0123549 A1 | 1-18 |
| A | JP 2003-18600 A (Hitachi, Ltd.), 17 January, 2003 (17.01.03), Full text; all drawings (Family: none) | 1-18 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 13 January, 2009 (13.01.09) | Date of mailing of the international search report 27 January, 2009 (27.01.09) |
|---|---|
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/002924 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2004-172944 A (Victor Company Of Japan, Ltd.), 17 June, 2004 (17.06.04), Full text; all drawings (Family: none) | 1-18 |
| A | JP 2007-27980 A (Mitsubishi Electric Corp.), 01 February, 2007 (01.02.07), Full text; all drawings (Family: none) | 1-18 |
| A | JP 2006-211152 A (National University Corporation Hokkaido University), 10 August, 2006 (10.08.06), Full text; all drawings (Family: none) | 1-18 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. Portilla ; E. P. Simoncelli.** A parametric texture model based on joint statistics of complex wavelet coefficients. *Int. J. Comput. Vis.,* 2000, vol. 40